Europäisches Patentamt

European Patent Office

Office européen des brevets

(11) Publication number: **0 286 246**
**A2**

## EUROPEAN PATENT APPLICATION

(21) Application number: 88302269.1

(22) Date of filing: 16.03.88

(51) Int. Cl.⁴: **D03D 15/00 , D03D 1/00 ,
B64D 17/00**

(30) Priority: 07.04.87 GB 8708310

(43) Date of publication of application:
**12.10.88 Bulletin 88/41**

(84) Designated Contracting States:
**DE ES FR GB SE**

(71) Applicant: **PERSEVERANCE MILLS LIMITED
Albion Mills
Padiham Lancashire BB12 7DY(GB)**

(72) Inventor: **Holmes, John
Roseneath, Whins Lane
Simonstone, Burnley Lancashire(GB)**
Inventor: **Walker, Harry
Manchester Road
Burnley Lancashire(GB)**

(74) Representative: **Funge, Harry et al
M'CAW & CO. 41-51 Royal Exchange Cross
Street
Manchester M2 7BD(GB)**

(54) Lightweight fabrics.

(57) The invention discloses a method of producing a lightweight parachute fabric comprising multi-filament polyamide yarns woven together to give a single layer, plain weave structure, wherein a silicone emulsion finish is applied to the fabric and such fabric is then calendered. The presence of the finish facilitates spread of the multi-filaments, thus serving to reduce permeability. The resultant fabric is of low permeability, and of lesser weight per unit area than conventional fabrics.

EP 0 286 246 A2

## LIGHTWEIGHT FABRICS

The invention concerns light weight fabrics, and has more particular reference to a light weight fabric for use as a parachute material.

Parachute fabrics by virtue of their intended end use, must necessarily be of light weight, resistant to tearing and of controlled low air-permeability.

Conventional parachute fabrics are of plain weave construction, and typically comprise high tenacity 33/10 nylon yarns both in the warp and weft directions. In order to provide resistance to tearing, two warp yarns are woven as one and two weft yarns are woven as one at intervals in the weft and warp directions respectively. After scouring and dyeing, the fabric is calendered, and subsequent to the calendering process is treated with a silicone emulsion finish. Fabrics produced as aforesaid have a weight of approximately 38 grammes per square metre, and have met with ready acceptance for use in their intended context.

However, the demand is for a parachute fabric which is not only strong and of low air-permeability, but which is of even lesser weight per unit area than conventional parachute fabrics, and the object of the invention is to provide a fabric which meets the needs of the industry.

According to the present invention there is proposed a method for the manufacture of a parachute fabric characterised in that a silicone emulsion finish is applied to a lightweight fabric comprising multifilament polyamide yarns and such fabric is then subjected to a calendering process.

According to a preferred feature of the invention, the calendering is effected at high temperature and includes multiple passes with fabric reversal at each stage.

The invention also includes a parachute fabric made by the method as aforesaid.

Preferably the fabric is of woven construction and comprises nylon multi-filament medium tenacity yarns in both warp and weft directions.

The invention will now be described further, by way of example only, with reference to the accompanying block diagram identifying the process steps involved.

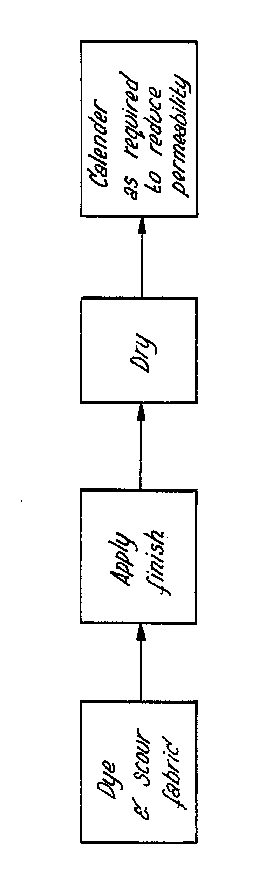

Thus, referring now to the drawing, in producing a lightweight fabric for use in the manufacture of parachutes, a plain weave, single layer fabric comprising multi-filament nylon yarns in both warp and weft directions is scoured and dyed and a silicone emulsion finish is then applied to the fabric. After drying, the fabric is calendered at high temperature by multiple passes through a calendering machine, the fabric being reversed at each successive pass through the machine, until a requisite degree of permeability is achieved.

In a specific example, the warp and weft yarns both comprise medium tenacity 33 Decitex/26 filament nylon type 341 yarn (ICI), there being at least 45 weft picks and at least 45 warp ends per centimetre in the loom, and the plain weave is provided with a rip-stop pattern wherein two warp yarns are woven as one and two weft yarns are woven as one at intervals in the weft and warp directions, respectively, of the fabric. Typically, every fourteenth warp and every fifteenth weft is woven 2 as 1, although other intervals may be preferred in some instances.

The use of medium tenacity yarns, instead of the high tenacity yarns commonly used in the manufacture of parachute fabrics, gives greater extensibility, and thus enables the fabric readily to withstand opening shock loads on use of the parachute. Furthermore, the medium tenacity yarns give rise to a higher tear strength than is the case with previously known parachute fabrics.

The silicone emulsion finish, of which a preferred example is MYRIDAL XC 58 is applied to the fabric by passing such fabric, on a jig, through a bath containing the emulsion, the application being such that, after drying the finish amounts to between 0.2% and 0.4% by weight of the fabric.

The coated fabric is calendered at a temperature of, say 160°C, and the calendering step is continued until the air permeability of the fabric is at a requisite low level of, for example, no more than 3 cubic feet per minute at $\frac{1}{2}''$ water gauge on a Frazier permeometer.

The resultant fabric has a weight of 35 grams per square metre, as compared with a corresponding weight of 38 grams per square metre for conventional lightweight parachute fabrics.

By applying the silicone emulsion finish prior to the calendering step, which proposal is quite contrary to normal practice, we make available a means whereby the filaments might spread during the actual calendering to fill the interstices between the individual yarns and thus reduce the air permeability of the fabric, the finish acting as a lubricant to facilitate such movement.

We have found that a fabric produced by the method as aforesaid is eminently suitable for use as a parachute fabric, and offers improved characteristics in such fabric, particularly as regards a reduced weight per unit area, as compared with conventional such fabrics.

## Claims

1. A method of manufacturing a parachute fabric comprising the steps of forming a light weight coherent structure of multi-filament polyamide yarns, applying a silicone emulsion finish thereto and subsequently calendering said structure.

2. The method as claimed in claim 1, wherein the calendering is effected at high temperatures and includes multiple passes with fabric reversal at each stage.

3. The method as claimed in claim 1 or 2, wherein the step of forming a light weight coherent structure comprises weaving warp and weft yarns in a plain weave and includes the weaving of two yarns as one at intervals in at least one of the warp and weft directions.

4. A parachute fabric produced in accordance with the method claimed in claim 1.

5. A parachute fabric as claimed in claim 4, comprising warp and weft yarns arranged as a plain weave, single layer fabric.

6. A parachute fabric as claims in claim 5, wherein in at least one of the warp and weft directions two yarns are woven as one at spaced apart positions.

7. A parachute fabric as claimed in claim 5 or 6 comprising multi-filament medium tenacity polyamide yarns.

8. A parachute fabric as claimed in claim 5 or 6, wherein the emulsion finish exists in an amount of between 0.2% and 0.4% by weight of the fabric.

```
┌─────────────┐      ┌──────────┐      ┌──────────┐      ┌──────────────┐
│    Dye      │      │          │      │          │      │   Calender   │
│  & scour    │ ───▶ │  Apply   │ ───▶ │   Dry    │ ───▶ │ as required  │
│   fabric    │      │  finish  │      │          │      │ to reduce    │
│             │      │          │      │          │      │ permeability │
└─────────────┘      └──────────┘      └──────────┘      └──────────────┘
```

0 286 246